(19) Europäisches Patentamt
European Patent Office
Office européen des brevets

(11) **EP 3 592 000 B1**

(12) **EUROPEAN PATENT SPECIFICATION**

(45) Date of publication and mention
of the grant of the patent:
**31.03.2021  Bulletin 2021/13**

(21) Application number: **18764868.8**

(22) Date of filing: **23.01.2018**

(51) Int Cl.:
*H04W 4/02* *(2018.01)*

(86) International application number:
**PCT/CN2018/073856**

(87) International publication number:
**WO 2018/161729 (13.09.2018 Gazette 2018/37)**

(54) **USER PATH RECOVERY METHOD AND DEVICE**

VERFAHREN UND VORRICHTUNG ZUR WIEDERHERSTELLUNG EINES BENUTZERPFADS

PROCÉDÉ ET DISPOSITIF DE RÉCUPÉRATION DE CHEMIN D'UTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.03.2017  CN 201710132289**

(43) Date of publication of application:
**08.01.2020  Bulletin 2020/02**

(73) Proprietor: **Huawei Technologies Co., Ltd.
Longgang District
Shenzhen, Guangdong 518129 (CN)**

(72) Inventor: **GENG, Jie
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(56) References cited:
**EP-A1- 3 010 255      WO-A1-2014/204487
WO-A1-2016/015312   WO-A2-2012/092276
CN-A- 101 901 551    CN-A- 102 521 973
CN-A- 102 607 553    US-A1- 2012 115 475
US-A1- 2015 373 501**

**Description**

**TECHNICAL FIELD**

The present invention relates to the communications field, and in particular, to a user track restoration method and apparatus.

**BACKGROUND**

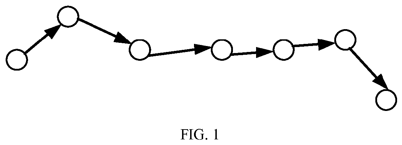

Every day, a carrier obtains a large amount of user communication data, for example, A-interface signaling data, call detail record (CDR) data, and measurement report (MR) data. These data includes information about a connection between a user and a serving base station. Because a base station location is known, in the prior art, a carrier may use, based on user communication data, the base station location as an approximate location of a user when current communication behavior occurs, to form discrete track points one by one, as shown in FIG 1. If all track points within a time period of a user are collected, a continuous user track may be formed. These user tracks may provide an additional data value to the carrier. For example, the carrier may analyze a living location and a work location of the user based on the user tracks, and provide a service and a marketing activity to the user.

Further, EP 3 010 255 A1 refers to a method comprising: providing a time sequence of mapped associations between a user terminal and a plurality of cell sectors on a first map; splitting the time sequence into user terminal stationary and mobile state sub-sequences; calculating user terminal locations from the user terminal stationary sub-sequences and marking them as endpoints locations in the first map; for at least one of said user terminal mobile subsequence, identifying geographical locations on the first map in which a probability of the user terminal having travelled through during the mapped association has a high probability value; adjusting weights of the high probability values based on streets or passageways included in second map; and estimating user terminal mobile paths by applying a street routing algorithm over the weighted high probability values of the second map.

Further, US 2012/0115475 A1 refers to methods and apparatuses for population tracking, counting and/or movement estimation. In one example, the method comprises receiving mobile phone operational data indicative of user equipment location, where the event data includes location area update messages and periodic registration messages; and performing travel estimation based on the mobile phone operation data, including performing interpolation on data associated with one or more individuals in a population to estimate intermediate positions of a trajectory of each of the one or more individuals for a specified time period based on a shortest path mesh sequence estimation algorithm.

Further, WO 2014/204487 A1 refers to an example of adaptive location perturbation including: selecting, by a processing resource of a mobile device executing instructions stored on a non-transitory medium, between a plurality of localization technologies to perturb a location measurement of the mobile device. The perturbed location measurement of the mobile device can be sent to a location-based service provider.

However, if a user is often frequently handed over between several connected base stations within a same time period, noise is generated in a user track. Consequently, it is difficult to locate a location of the user, and user track restoration within a time period is affected.

Based on this problem, a user track restoration solution is provided in the prior art. The solution is to restore a user track by periodically extracting a user track point. Although noise in the user track point can be reduced to some extent, noise reduction precision is relatively low. Therefore, how to improve noise reduction precision during user track restoration is an urgent problem needing to be resolved currently.

**SUMMARY**

This application provides a user track restoration method and apparatus, to improve at least noise reduction precision during user track restoration. This problem is solved by the subject matter of the independent claims. Further implementation forms are provided in the dependent claims.

To achieve the foregoing objective, this application provides the following technical solutions.

According to a first aspect, a user track restoration method is provided. The method includes: obtaining an original track point data sequence of a user whose track is to be restored, where each piece of original track point data in the original track point data sequence includes a base station identifier and a collection time point that correspond to the original track point data; determining an identifier of a base station of the user at a normalized time point based on a mapping model and the original track point data sequence when an overall mapping cost isthe smallest, to obtain a noise reduction track point data sequence of the user, where each piece of noise reduction track point data in the noise reduction track point data sequence includes a base station identifier and a normalized time point that correspond to the noise reduction track point data; the normalized time point is a time point of a fixed time interval; and restrictions of the mapping model include: a piece of original track point data is mapped to a base station identifier of a normalized time point, and a plurality of pieces of original track point data are mapped, at a same normalized time point, to a maximum of one base station identifier; and restoring, based on the noise reduction track point data sequence, the track of the user whose track is to be restored. Because the normalized time point is the time point of the fixed time interval; and the restrictions of the mapping model include: a piece of original track point data is mapped to a base station identifier of a normalized time point, and the plurality of pieces of original track point data are mapped, at the same normalized time point, to a maximum of one base station identifier, in other words, base stations between which the user is frequently handed over may be mapped to a unique base station of a normalized time point, a case in which the user is handed over between different base stations is eliminated based on the solution, so that data quality and precision after noise reduction during the track restoration can be greatly improved.

In a possible design, the restoring, based on the noise reduction track point data sequence, the track of the user whose track is to be restored includes: determining a noise reduction track point data sequence of a base station granularity of the user based on the noise reduction track point data sequence and a pre-trained user-base station model, where a parameter of the user-base station model includes: a transition probability between N base stations, where N is a quantity of identifiers of different base stations included in the original track point data sequence; and restoring, based on the noise reduction track point data sequence of the base station granularity, the track of the user whose track is to be restored. Based on the solution, missing data in the noise reduction track point data sequence may be filled in, to form a continuous user track, so that each normalized time point includes a user track point, further improving user track restoration precision.

In a possible design, the restoring, based on the noise reduction track point data sequence, the track of the user whose track is to be restored includes: determining a noise reduction track point data sequence of a base station granularity of the user based on the noise reduction track point data sequence and a pre-trained user-base station model, where a parameter of the user-base station model includes: a transition probability between N base stations, where N is a quantity of identifiers of different base stations included in the original track point data sequence; determining a noise reduction track point data sequence of a pre-trained base station-geographical raster model of the base station granularity, and a geographical raster granularity of the user based on a track point data sequence, where parameters of the base station-geographical raster model include: a transition probability between M geographical rasters, and output probabilities of the N base stations in each geographical raster, where M is a positive integer; and restoring, based on the noise reduction track point data sequence of the geographical raster granularity, the track of the user whose track is to be restored. Based on the solution, missing data in the noise reduction track point data sequence may be filled in, to form a continuous user track, so that each normalized time point includes a user track point, and the user track restoration precision may be controlled by using geographical raster precision, further improving the user track restoration precision.

In a possible design, each piece of the original track point data in the original track point data sequence further includes a longitude and a latitude of the base station corresponding to the original track point, to obtain the noise reduction track point data sequence of the geographical raster granularity based on the longitude and the latitude of the base station, and restore, based on the noise reduction track point data sequence of the geographical raster granularity, the track of the user whose track is to be restored. Certainly, a longitude and a latitude of a base station corresponding to a base station identifier may alternatively be obtained based on the base station identifier in the original track point data. This is not specifically limited in this application.

In a possible design, the determining a noise reduction track point data sequence of a base station granularity of the user based on the noise reduction track point data sequence and a pre-trained user-base station model includes: determining a normalized time point included in missing track point data in the noise reduction track point data sequence based on the normalized time point included in the noise reduction track point data in the noise reduction track point data sequence; based on the probability of the transition between the N base stations and a first preset formula, determining a transition probability of a first complete path constituted, at the normalized time point included in the missing track point data and when the base station of the user corresponds to any one of the N base stations, by a base station corresponding to a base station identifier included in the missing track point data and the base station corresponding to the base station identifier included in the noise reduction track point data, where the first preset formula includes: the transition probability of the first complete path=a product of probabilities of transitions between base stations on the first complete path; determining a plurality of base stations on a path whose transition probability of the first complete path is the largest as base stations that are of the user whose track is to be restored and that are at different normalized time points; and determining, based on the base stations that are of the user whose track is to be restored and that are at the different normalized time points, the noise reduction track point data sequence of the base station granularity of the user whose track is to be restored. Because the noise reduction track point data sequence of the base station granularity restored based on the track restoration method has a largest state transition probability, the user track restoration precision can be greatly improved.

In a possible design, the determining a noise reduction track point data sequence of a geographical raster granularity of the user based on a track point data sequence and a pre-trained base station-geographical raster model of the base station granularity includes: based on a second preset formula and based on a normalized time point, a base station identifier, and a transition probability between M geographical rasters included in noise reduction track point data of each base station granularity of the noise reduction track point data sequence of the base station granularity, and output probabilities of the N base stations in each geographical raster, determining that a transition probability of a second complete path connected to all geographical rasters of a base station corresponding to the normalized time point can be output at each normalized time point, where the second preset formula includes: $P = Y_{1,1} * X_{1,2} * Y_{2,2} * ... * X_{r,r+1} * Y_{r+1,r+1}...$, where $Y_{r+1,r+1}$ represents an output probability of a base station at an $r+1^{th}$ normalized time point in a geographical raster at the $r+1^{th}$ normalized time point on the second complete path, and $X_{r,r+1}$ represents a transition probability between a geographical raster at an $r^{th}$ normalized time point on the second complete path and the geographical raster at the $r+1^{th}$ normalized time point; determining a plurality of geographical rasters on a path whose transition probability of the second complete path is the largest as geographical rasters that are of the user whose track is to be restored and that are at different normalized time points; and determining, based on the geographical rasters that are of the user whose track is to be restored and that are at the different normalized time points, the noise reduction track point data sequence of the geographical raster granularity of the user whose track is to be restored. Because the noise reduction track point data sequence of the geographical raster granularity restored based on the track restoration method has a largest state transition probability, and the geographical raster granularity is smaller than the base station granularity, the user track restoration precision can be greatly improved.

In a possible design, the method further includes: obtaining a plurality of pieces of first training data for training the user-base station model, where each of the plurality of pieces of first training data includes the base station identifier and the collection time point; determining, based on each piece of the first training data, a quantity of times of transitions from any one of the N base stations to any one of the N base stations; and determining the probability of the transition between the N base stations based on a third preset formula and the quantity of times of transitions from any one of the N base stations to any one of the N base stations, where the third preset formula includes:

$$\omega(n1, n2) = \frac{\alpha(n1, n2)}{\sum_{n2=1}^{n2=N} \alpha(n1, n2)},$$ where $\alpha(n1, n2)$ represents a quantity of times of transitions from an $n1^{th}$ base station to an $n2^{th}$ base station, $\sum_{n2=1}^{n2=N} \alpha(n1, n2)$ represents a total quantity of times of transitions from the $n1^{th}$ base station to the N base stations, and $\omega(n1, n2)$ represents a transition probability from the $n1^{th}$ base station to the $n2^{th}$ base station. Based on the solution, the user-base station model may be trained, to obtain the parameter of the user-base station model: the probability of the transition between the N base stations.

In a possible design, the method further includes: obtaining a plurality of pieces of second training data for training the base station-geographical raster model, where each of the plurality of pieces of second training data includes the base station identifier, the collection time point, and a longitude and a latitude of the user; determining a distance between any one of the M geographical rasters and any one of the M geographical rasters based on the longitude and the latitude of the user in each piece of the second training data; determining a transition probability between any one of the M geographical rasters and any one of the M geographical rasters based on the distance between any one of the M geographical rasters and any one of the M geographical rasters, and with reference to a preset rule; determining, based on each piece of the second training data, a quantity of times of outputting any one of the N base stations in any one of the M geographical rasters; and determining, based on a fourth preset formula and the quantity of times of outputting any one of the N base stations in any one of the M geographical rasters, an output probability of any one of the N base stations in any one of the M geographical rasters, where the fourth preset formula includes:

$$\omega(m, n3) = \frac{\alpha(m, n3)}{\sum_{n3=1}^{n3=N} \alpha(m, n3)},$$ where $\alpha(m, n3)$ represents a quantity of times of outputting an $n3^{th}$ base station in an

$m^{th}$ geographical raster, $\sum_{n3=1}^{n3=N} \alpha(m, n3)$ represents a total quantity of times of outputting the N base stations in the

$m^{th}$ geographical raster, and $\omega(m, n3)$ represents an output probability of the $n3^{th}$ base station in the $m^{th}$ geographical raster. Based on the solution, the base station-geographical raster model may be trained, to obtain the parameters of the base station-geographical raster model: the probability of the transition between the M geographical rasters, and the output probabilities of the N base stations in each geographical raster.

In a possible design, the user-base station model in this application is a Markov model.

In a possible design, the base station-geographical raster model in this application is a hidden Markov model.

According to a second aspect, a user track restoration apparatus is provided. The user track restoration apparatus has a function of implementing the foregoing method. The function may be implemented by using hardware, or may be implemented by hardware executing corresponding software. The hardware or the software includes one or more modules corresponding to the foregoing function.

According to a third aspect, a user track restoration apparatus is provided, and includes: a processor and a communications interface. The processor is connected to the communications interface by using a bus. The processor is configured to implement the user track restoration method according to the first aspect and any possible implementation of the first aspect.

In a possible design, the user track restoration apparatus further includes a memory. The memory is configured to store a computer program instruction, and the processor is connected to the memory by using the bus. The processor executes the program instruction stored in the memory, so that the user track restoration apparatus performs the user track restoration method according to the first aspect and any possible implementation of the first aspect.

According to a fourth aspect, a computer-readable storage medium is provided, to store a computer program instruction used by the foregoing user track restoration apparatus. When the computer program instruction is run on a computer, the computer is enabled to perform the user track restoration method according to any item in the first aspect.

According to a fifth aspect, a computer program product including an instruction is provided. When the computer program product is run on a computer, the computer is enabled to perform the user track restoration method according to any item in the first aspect.

For a technical effect brought by any design manner in the second aspect to the fifth aspect, refer to technical effects brought by the different design manners in the first aspect. Details are not described herein again.

## BRIEF DESCRIPTION OF DRAWINGS

FIG. 1 is a schematic diagram of discrete track points in the prior art;
FIG. 2 is a schematic structural diagram of a user track restoration apparatus according to an embodiment of this application;
FIG. 3 is a schematic diagram of an original track point data sequence according to an embodiment of this application;
FIG. 4 is a schematic flowchart of a user track restoration method according to an embodiment of this application;
FIG. 5 is a schematic diagram of a two-dimensional matrix according to an embodiment of this application;
FIG. 6 is a schematic diagram of mapping an original track point to a two-dimensional matrix according to an embodiment of this application;
FIG. 7 is a schematic diagram of distribution, at a normalized time point, of a base station corresponding to a noise reduction track point according to an embodiment of this application;
FIG. 8 is a schematic diagram 1 of a Markov model prediction according to an embodiment of this application;
FIG. 9 is a schematic diagram 2 of a Markov model prediction according to an embodiment of this application;
FIG. 10 is a schematic diagram 3 of a Markov model prediction according to an embodiment of this application;
FIG. 11 shows a user track of a base station granularity according to an embodiment of this application;
FIG. 12 is a schematic diagram of distribution of output of a base station in a geographical raster according to an embodiment of this application;
FIG. 13 is a schematic diagram of a path connection of a hidden Markov model according to an embodiment of this application; and
FIG. 14 is a schematic structural diagram of hardware of a user track restoration apparatus according to an embodiment of this application.

## DESCRIPTION OF EMBODIMENTS

For ease of expression, definitions and explanations of some key terms related to the following embodiments of this application are first provided as follows:

A-interface signaling data: An A-interface is an interface between a base station controller (base station controller, BSC) and a mobile switching center (mobile switching center, MSC). The A-interface signaling data is terminal data recorded in the A-interface, for example, power-on, power-off, a periodic location update, calling and called parties, short message service message receiving and sending, and cell handover.

CDR data: The CDR data records detailed service data during a voice service, a short message service, and an Internet access service that are performed by a user, and includes a communication number, communication duration, base station connection information, and the like.

MR data: The MR data is information reported by a user to a carrier when communication behavior occurs, and the information includes a user identifier, an MR recording time, an identifier of a connected base station, signal strength of the connected base station, and the like.

Carrier channel (over the top, OTT) data: The OTT data is data that is of a content provider (such as WeChat or a map) and that is obtained from a carrier data channel. For example, the OTT data may include a user identifier, a recording time, and precise longitude and latitude information of the user. The precise longitude and latitude information of the user is usually represented by using a geographical raster identifier. A geographical raster is a sub-grid in a grid array obtained after grid division is performed on a map, and usually has a size of 50*50 meters.

Markov model (Markov Model, MM): The Markov model is mainly determined by a state transition probability. In the embodiments of this application, a state refers to a base station, and the state transition probability is a transition probability of a user location between base stations. The user can be located on only one base station thereof at each discrete moment, and is transitioned to another base station at a next moment based on probabilities of transitions between the base station and other base stations. The probability of the transition between base stations is obtained through training and learning based on an original track point data sequence in the MR data of the user or a noise reduction track point data sequence of a base station granularity after track restoration. When the noise reduction track point data sequence is input into a pre-trained Markov model to perform track filling, a sequence constituted by a plurality of pieces of track point data on a path whose transition probability of a complete path obtained after the filling is determined as a noise reduction track point data sequence of a base station granularity of a user whose track is to be restored. The foregoing process of Markov model training and a process of inputting the noise reduction track point data sequence into the pre-trained Markov model to perform track restoration are described in detail in the following embodiments. Details are not described herein.

Hidden Markov model (Hidden Markov Model, HMM): The hidden Markov model is used to describe a Markov process whose state is invisible but whose observed value is visible, and is mainly determined by a state transition probability and an output probability of the observed value in the state. In this embodiment of this application, the state refers to a geographical raster, and the observed value refers to a base station. The state transition probability is a transition probability of a user location between geographical rasters. The output probability of the observed value in the state is an output probability of a base station in a geographical raster. In this embodiment of this application, an output probability of a base station in a geographical raster is specifically a probability of connection to all surrounding base stations to which a user may be connected when the user is located in a current geographical raster. In other words, in this embodiment of this application, parameters of the hidden Markov model are the probability of the transition between geographical rasters and an output probability of the base station in each geographical raster. The user can be located in only one geographical raster thereof at each discrete moment, and only one of many connected base stations can be output in each geographical raster. At a next moment, the user is transitioned to another geographical raster based on probabilities of transitions between the geographical raster and other geographical rasters, and another base station is outputted based on an output probability of a base station in the geographical raster after the transition. A transition probability of a user location between geographical rasters and an output probability of a base station in a geographical raster are obtained through training and learning based on the original track point data sequence in the MR data of the user and the longitude and latitude of the user in the OTT data. Alternatively, a transition probability of a user location between geographical rasters and an output probability of a base station in a geographical raster are obtained through training and learning based on a noise reduction track point data sequence of a geographical raster granularity after track restoration. When a noise reduction track point data sequence is input into a pre-trained hidden Markov model to perform a geographical raster prediction, the user may deduce an internally-experienced geographical raster sequence based on an externally-observed base station sequence, to obtain the noise reduction track point data sequence of the geographical raster granularity. The foregoing process of hidden Markov model training and a process of inputting the noise reduction track point data sequence into the pre-trained hidden Markov model to perform a geographical raster prediction are described in detail in the following embodiments. Details are not described herein.

The following describes the technical solutions in the embodiments of this application with reference to the accompanying drawings in the embodiments of this application. In the description of this application, unless otherwise stated, "a plurality of" means two or more than two.

First, an application scenario of an embodiment of this application is provided:

It is assumed that, within a time period of 10:00 to 18:00 on August 24, 2016, a carrier receives a plurality of pieces of MR data reported by a user A, each piece of MR data includes a user identifier, an MR recording time, an identifier of a connected base station, and the like that are reported by the user A to the carrier when communication behavior occurs, as shown in Table 1.

**Table 1**

| MR data sequence number | User identifier | MR recording time | Base station identifier | ... |
|---|---|---|---|---|
| 1 | User A | 2016-8-24 10:03:37 | Base station A | ... |
| 2 | User A | 2016-8-24 10:14:25 | Base station B | ... |
| 3 | User A | 2016-8-24 10:19:25 | Base station A | ... |
| 4 | User A | 2016-8-24 10:39:10 | Base station C | ... |
| 5 | User A | 2016-8-24 10:44:15 | Base station B | ... |
| 6 | User A | 2016-8-24 10:56:03 | Base station C | ... |
| 7 | User A | 2016-8-24 11:07:09 | Base station A | ... |
| 8 | User A | 2016-8-24 11:15:16 | Base station A | ... |
| ... | ... | ... | ... | ... |

It can be learned from Table 1 that, within the period of time of 10:00 to 18:00 on August 24, 2016, the user A is often frequently handed over between several connected base stations, for example, is handed over from the base station A to the base station B, then handed over from the base station B back to the base station A, then handed over from the base station A to the base station C, then handed over from the base station C to the base station B, ..., and the like. Noise is generated in a track point of the user A due to the frequent handover. Consequently, during restoration of a track of the user A within the time period of 10:00 to 18:00 on August 24, 2016, it is difficult to locate a location of the user A, and the restoration of the track of the user A within the time period is affected. Based on this problem, a user track restoration solution is provided in the prior art. The solution is to restore the track of the user A by periodically extracting a track point of the user A. For example, the extraction is performed once every two pieces of MR data, and an extraction result is shown in Table 2:

Table 2

| MR data sequence number | User identifier | MR recording time | Connected base station identifier |
|---|---|---|---|
| 1 | User A | 2016-8-24 10:03:37 | Base station A |
| 3 | User A | 2016-8-24 10:19:25 | Base station A |
| 5 | User A | 2016-8-24 10:44:15 | Base station B |
| 7 | User A | 2016-8-24 11:07:09 | Base station A |
| ... | ... | ... | ... |

It can be learned from Table 2 that, the noise in the track point of the user A can be reduced to some extent. The user A is not handed over between the first track point (a track point corresponding to MR data 1) and the second track point (a track point corresponding to MR data 3), and all connected base stations are the base station A. However, the solution has relatively low noise reduction precision. For example, from the third track point (a track point corresponding to MR data 5), the user A still needs to be handed over from the base station A to the base station B, then handed over from the base station B back to the base station A, .... Therefore, how to improve noise reduction precision during user track restoration is an urgent problem needing to be resolved currently.

To resolve the problem, the embodiments of this application provide a user track restoration method and apparatus, to improve the noise reduction precision during the user track restoration. Specific solutions are as follows:

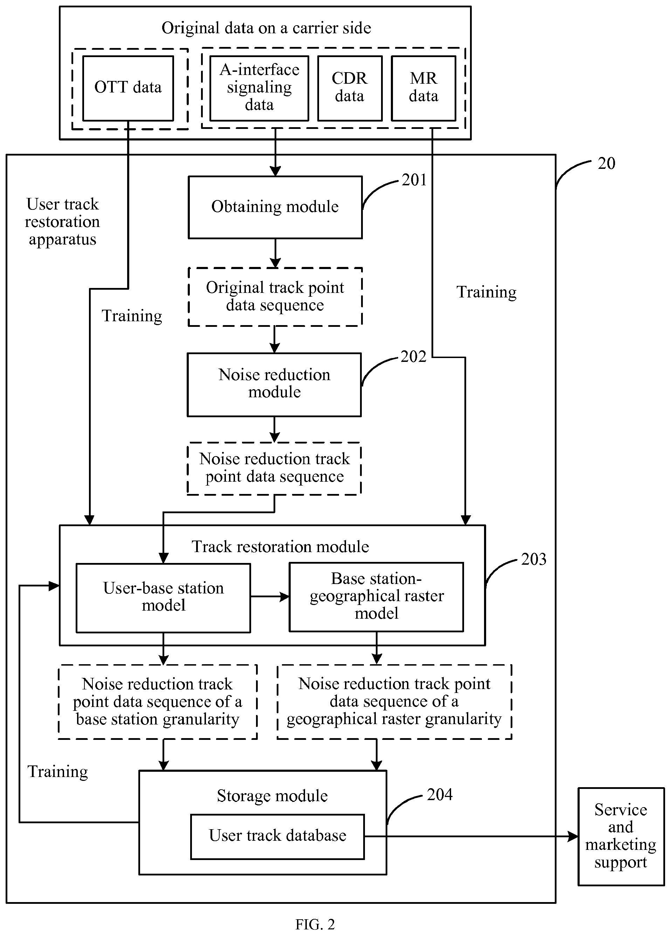

FIG. 2 is a schematic structural diagram of a user track restoration apparatus according to an embodiment of this application. The user track restoration apparatus 20 includes an obtaining module 201, a noise reduction module 202, a track restoration module 203, and a storage module 204.

The obtaining module 201 in the user track restoration apparatus obtains user original track point data sequences from a carrier side. These original track point data sequences include noise (due to frequent handover between base stations), and are uncontinuous in time (where there are a large amount of data within some time periods, but there is no data within some time periods). The noise reduction module 202 is configured to eliminate noise in an original track point data sequence, to obtain a noise reduction track point data sequence. The noise reduction track point data sequence has normalized time point information (for example, one track point every 10 minutes). However, the noise reduction track point data sequence is still uncontinuous, and data in many normalized time points is missing. The track restoration module 203 is configured to fill in the missing data of the noise reduction track point data sequence, to form a continuous user track, so that each normalized time point includes a track point of the user, referred to as a final track point of the user. A user-base station model in the track restoration module 203 can restore a track point of a base station granularity, and a base station-geographical raster model can restore a track point of a raster granularity. These restored final track points are stored into a user track database, to support a subsequent service and a subsequent marketing activity. Specifically,

the obtaining module 201 is configured to obtain, from original data of a carrier, an original track point data sequence of a user whose track is to be restored, where each piece of original track point data in the data sequence includes a base station identifier and a collection time point that correspond to the original track point data.

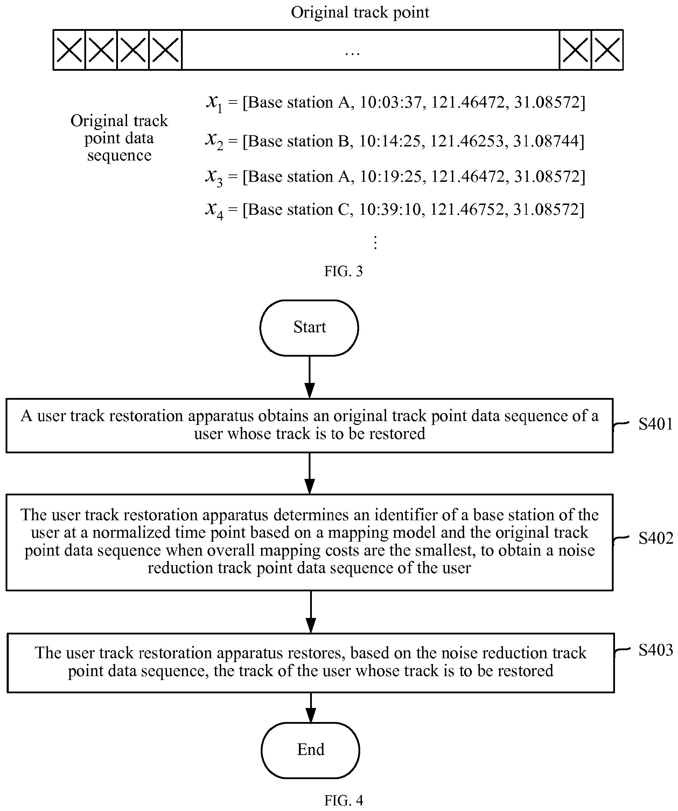

For example, in the foregoing application scenario, the obtaining module 201 may obtain a plurality of original track point data sequences of the user A based on the plurality of pieces of MR data that are reported by the user A and that are shown in Table 1. Each piece of original track point data in the data sequences includes a base station identifier and a collection time point that correspond to the original track point data. Optionally, each piece of original track point data in the data sequences may alternatively include a longitude and a latitude of a base station corresponding to the original track point. Alternatively, the obtaining module 201 may obtain, based on a base station identifier in original track point data, a longitude and a latitude of a base station corresponding to the base station identifier. As shown in FIG. 3, these pieces of original track point data are sorted in order of time, and are respectively:

the first piece of original track point data $x_1$ =[the base station A, 10:03:37, 121.46472, 31.08572];

the second piece of original track point data $x_2$ =[the base station B, 10: 14:25, 121.46253, 31.08744];

the third piece of original track point data $x_3$ =[the base station A, 10:19:25, 121.46472, 31.08572];

the fourth original track point data $x_4$ =[the base station C, 10:39:10, 121.46752, 31.08572]; and the like. Enumeration one by one is not performed herein.

From the base station identifiers included in the different track point data sorted in order of time in FIG. 3 or with reference to the description of the foregoing application scenario, it can be learned that, the user A is frequently handed over within a time period of the to-be-restored track, and consequently noise is generated in the track point of the user A. To prevent the noise from affecting restoration of the track of the user A within the time period, the noise reduction module 202 needs to perform noise reduction.

The noise reduction module 202 is configured to eliminate the noise in the original track point data sequence by using an optimal technology, to obtain the noise reduction track point data sequence. Spatial-temporal costs paid by the original track point data sequence after the noise reduction are the smallest. A specific noise reduction solution is described in the following embodiments. Details are not described herein. The noise reduction module 202 can greatly improve data quality and precision after the noise reduction.

Optionally, considering that although the noise reduction track point data sequence obtained after the noise reduction performed by the noise reduction module 202 has normalized time point information (for example, one track point every 10 minutes), the noise reduction track point data sequence is still uncontinuous, and data at many normalized time points is missing, to further improve user track restoration precision, the track restoration module 203 needs to perform track restoration.

The track restoration module 203 is configured to restore a user track based on the noise reduction track point data sequence, to obtain a final track point data sequence. As shown in FIG. 2, the track restoration module 203 in this embodiment of this application may include two track restore models. One is a user-base station model whose input is a noise reduction track point data sequence and output is a noise reduction track point data sequence of a base station granularity. The other is a base station-geographical raster model whose input is the noise reduction track point data sequence of the base station granularity and output is a noise reduction track point data sequence of a geographical raster granularity. The noise reduction track point data sequence of the geographical raster granularity may be used as the final track point data sequence. A specific track restoration solution is described in the following embodiments. Details are not described herein. The track restoration module 203 may fill in the missing data in the noise reduction track point data sequence, to form a continuous user track, so that each normalized time point includes a user track point, greatly improving the user track restoration precision.

It should be noted that, the track restoration module 203 provided in this embodiment of this application may alternatively include the foregoing user-base station model. The noise reduction track point data sequence of the base station granularity that is output by the user-base station model is used as the final track point data sequence. This is not specifically limited in this embodiment of this application.

The user-base station model in this embodiment of this application may specifically be the foregoing Markov model. The base station-geographical raster model in this embodiment of this application may specifically be the foregoing hidden Markov model.

Optionally, considering that training the user-base station model by using the noise reduction track point data sequence of the base station granularity and training the base station-geographical raster model by using the noise reduction track point data sequence of the geographical raster granularity make training results of the models more accurate, the user track restoration apparatus 20 provided in this embodiment of this application further includes the storage module 204.

The storage module 204 is configured to store the noise reduction track point data sequence of the base station granularity and the noise reduction track point data sequence of the geographical raster granularity in the user track database of the storage module 204. The noise reduction track point data sequence of the base station granularity may be used to train the user-base station model. The noise reduction track point data sequence of the geographical raster granularity may be used to train the base station-geographical raster model. A specific model training solution is described in the following embodiments. Details are not described herein. In addition, the final track point data sequence is further used to support the subsequent service and the subsequent marketing activity.

With reference to the user track restoration apparatus in FIG. 2, the following describes the user track restoration method provided in the embodiments of this application. FIG. 4 shows a possible method for implementing user track restoration according to an embodiment of this application. The method includes the following steps S401 to S403.

S401: A user track restoration apparatus obtains an original track point data sequence of a user whose track is to be restored.

The obtaining module 201 in FIG. 2 is configured to support the user track restoration apparatus in performing step S401 in this embodiment of this application. For a related description refer to an obtaining module 201 part. Details are not described herein again.

S402: The user track restoration apparatus determines an identifier of a base station of the user at a normalized time point based on a mapping model and the original track point data sequence when an overall mapping cost isthe smallest, to obtain a noise reduction track point data sequence of the user.

Each piece of noise reduction track point data in the noise reduction track point data sequence includes a base station identifier and a normalized time point that correspond to the noise reduction track point data. The normalized time point is a time point of a fixed time interval. Restrictions of the mapping model include: a piece of original track point data is mapped to a base station identifier of a normalized time point, and a plurality of pieces of original track point data are mapped, at a same normalized time point, to a maximum of one base station identifier.

Each noise reduction track point data includes two elements: base station identifier and a normalized time point that correspond to the noise reduction track point data. Therefore, that a piece of original track point data is mapped to a base station identifier of a normalized time point is actually: a piece of original track point data can correspond to only a piece of noise reduction track point data. This is uniformly described herein, and details are not described again in the following.

In a possible implementation, before S402, the method further includes: creating, by the user track restoration apparatus, a two-dimensional matrix based on the base station identifier and the normalized time point in the original track point data sequence obtained in step 401.

A matrix element $y_{n,p}$ in an n$^{th}$ row and a p$^{th}$ column in the two-dimensional matrix is represented by using (an n$^{th}$ base station identifier, a p$^{th}$ normalized time point), where both n and p are positive integers.

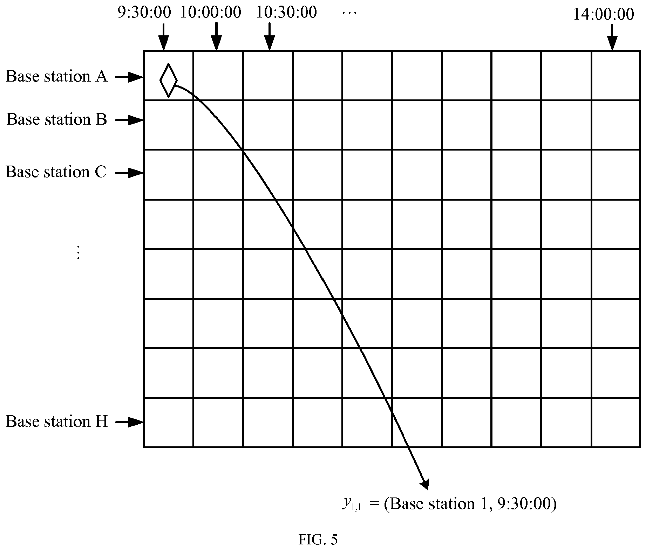

For example, assuming that a data sequence is shown in FIG. 3, there are eight different base station identifiers in the data sequence, and normalized time points are 10 time points in total: respectively 9:30:00, 10:00:00, 10:30:00, 11:00:00, 11:30:00, 12:00:00, 12:30:00, 01:00:00, 01:30:00, and 02:00:00, a two-dimensional matrix created based on a base station identifier and a normalized time point that correspond to each original track point in the data sequence may be shown in FIG. 5. A matrix element $y_{n,p}$ in an n$^{th}$ row and a p$^{th}$ column in the two-dimensional matrix is represented by using (an n$^{th}$ base station identifier, a p$^{th}$ normalized time point). For example, if the first base station identifier is a base station A, and the first normalized time point is 9:30:00, $y_{1,1}$ =(the base station A, 9:30:00). It should be noted that, for ease of representation herein, the two-dimensional matrix is presented in a form of a two-dimensional grid. Every sub-grid in the two-dimensional grid represents one matrix element in the two-dimensional matrix. This is uniformly described herein, and details are not described again in the following.

A normalized time point in this embodiment of this application is a time point of a fixed time interval. The normalized time point may be preset, or may be determined based on a collection time point in a collected original track point data sequence. For example, if a preset time period is 9:00:00 to 14:00:00, and a preset time interval is 30 minutes, normalized time points shown in FIG. 5 may be obtained after the preset time period is divided based on the preset time interval. A configuration manner of the normalized time points is not specifically limited in this embodiment of this application.

It should be noted that, in the two-dimensional matrix shown in FIG. 5, descriptions are provided by using an example in which a list of all base station identifiers in the original track point data sequence is used as a longitudinal axis of the two-dimensional matrix, and a list of the normalized time points is used as a lateral axis of the two-dimensional matrix. Certainly, the list of all base station identifiers in the original track point data sequence may be used as a lateral axis of the two-dimensional matrix, and the list of the normalized time points may be used as a longitudinal axis of the two-dimensional matrix. This is not limited in this embodiment of this application.

That the user track restoration apparatus determines an identifier of a base station of the user at a normalized time point based on a mapping model and the original track point data sequence when an overall mapping cost isthe smallest, to obtain a noise reduction track point data sequence of the user may specifically be: the user track restoration apparatus determines, based on the mapping model and the original track point data sequence, a matrix element corresponding to each piece of original track point data when each piece of original track point data is respectively mapped to the two-dimensional matrix and when the an overall mapping cost isthe smallest, to obtain the noise reduction track point data sequence of the user.

Because the matrix element $y_{n,p}$ in the $n^{th}$ row and the $p^{th}$ column in the two-dimensional matrix is represented by using (the $n^{th}$ base station identifier, the $p^{th}$ normalized time point), when each piece of original track point data is respectively mapped to the two-dimensional matrix, restrictions of the mapping model may be: one piece of original track point data is mapped to one matrix element, and a maximum of one matrix element in each column of the two-dimensional matrix has a mapping relationship with the original track point data.

Specifically, in a possible implementation, that the user track restoration apparatus determines, based on the mapping model and the original track point data sequence, a matrix element corresponding to each piece of original track point data when each piece of original track point data is respectively mapped to the two-dimensional matrix and when the an overall mapping cost isthe smallest may specifically include: determining, based on a preset optimal target function and the restrictions, a weight of mapping each piece of original track point data to each matrix element when each piece of original track point data is respectively mapped to the two-dimensional matrix and when the an overall mapping cost isthe smallest; for the original track point data $x_t$, determining a corresponding matrix element when $f_{t,n,p}$ = 1 , and that $y_{n,p}$ is a matrix element corresponding to the original track point data $x_t$, where $f_{t,n,p}$ represents a weight of mapping $x_t$ to $y_{n,p}$. The preset optimal target function is shown in a formula (1):

$$WORK(X, Y, F) = \sum_{t=1}^{T} \sum_{n=1}^{N} \sum_{p=1}^{P} f_{t,n,p} \cdot d_{t,n,p} \quad \text{formula (1)}$$

Based on the formula (1), when the an overall mapping cost isthe smallest, corresponding $f_{t,n,p}$ is shown in a formula (2):
when the an overall mapping cost isthe smallest, the corresponding

$$f_{t,n,p} = \arg\min_{F} WORK(X,Y,F) \quad \text{formula (2)}$$

where N is a quantity of different base station identifiers included in the track point data sequence; P is a quantity of normalized time points; T is a quantity of pieces of original track point data; $WORK(X, Y, F)$ represents overall costs that need to be paid when mapping is performed by using a weight of $f_{t,n,p}$ ; and argmin $WORK(X,Y,F)$ represents minimizing $WORK(X,Y,F)$, $\sum_{k=1}^{K}$ represents a summation of values of 1 to K of a variable k, and $d_{t,n,p}$ represents the costs of mapping $x_t$ to $y_{n,p}$.

The restrictions include: $f_{t,n,p} \in \{0,1\}$, $a_{n,p} \in \{1,2,...,T\}$, $b_{n,p} \in \{0,1\}$, $\sum_{n,p} f_{t,n,p} = 1$, $\sum_{t} f_{t,n,p} = a_{n,p}$,

$\sum_{n} b_{n,p} \leq 1$, $M \cdot b_{n,p} \geq a_{n,p}$, and $\forall n, p : a_{n,p} \geq b_{n,p}$

M is a maximal number; $a_{n,p}$ represents a quantity of pieces of original track point data that can be mapped to $y_{n,p}$ ; $b_{n,p}$ represents whether there is a mapping relationship between $y_{n,p}$ and the original track point data, and if there is the mapping relationship, $b_{n,p}$ =1, or if there is no mapping relationship, $b_{n,p}$ = 0; and $\forall n, p$ represents any n and p.

$f_{t,n,p} \in \{0,1\}$ restricts the weight of mapping $x_t$ to $y_{n,p}$ to be 0 or 1. If there is mapping, $f_{t,n,p}$ = 1. If there is no mapping, $f_{t,n,p}$ = 0.

$a_{n,p} \in \{1,2,...,T\}$ restricts the quantity of pieces of original track point data that can be mapped to $y_{n,p}$ to be an integer from 0 to T.

$b_{n,p} \in \{0,1\}$ restricts whether there is a mapping relationship between $y_{n,p}$ and the original track point data, and if there is the mapping relationship, $b_{n,p} = 1$ ; or if there is no mapping relationship, $b_{n,p}=0$. $\sum_t f_{t,n,p} = 1$ restricts the weight of mapping $x_t$ to $y_{n,p}$ to be 1, in other words, restricts one piece of original track point data to be mapped to one matrix element. $\sum_t f_{t,n,p} = a_{n,p}$ restricts a quantity of $x_t$ mapped to $y_{n,p}$ being 1 to be the same as the quantity of pieces of original track point data that can be mapped to $y_{n,p}$. In other words, if the weight of mapping $x_t$ to $y_{n,p}$ is 1, it represents that $x_t$ can be mapped to $y_{n,p}$. $\sum_n b_{n,p} \leq 1$ restricts a maximum of one matrix element in each column of the two-dimensional matrix to have a mapping relationship with the original track point data.

$M \cdot b_{n,p} \geq a_{n,p}$ and $\forall n, p : a_{n,p} \geq b_{n,p}$ jointly restrict $a_{n,p}$ not to conflict with $y_{n,p}$. For example, if $a_{n,p} = 0$ , $b_{n,p} = 0$ ; or if $b_{n,p} = 1$, $a_{n,p} \geq 1$.

A weight of mapping each piece of original track point data to each matrix element when the an overall mapping cost isthe smallest may be determined under the foregoing restrictions by solving the formula (1) and the formula (2). For the original track point data $x_t$, it is determined that the corresponding matrix element $y_{n,p}$ when $f_{t,n,p} = 1$ is the matrix element corresponding to the original track point data $x_t$.

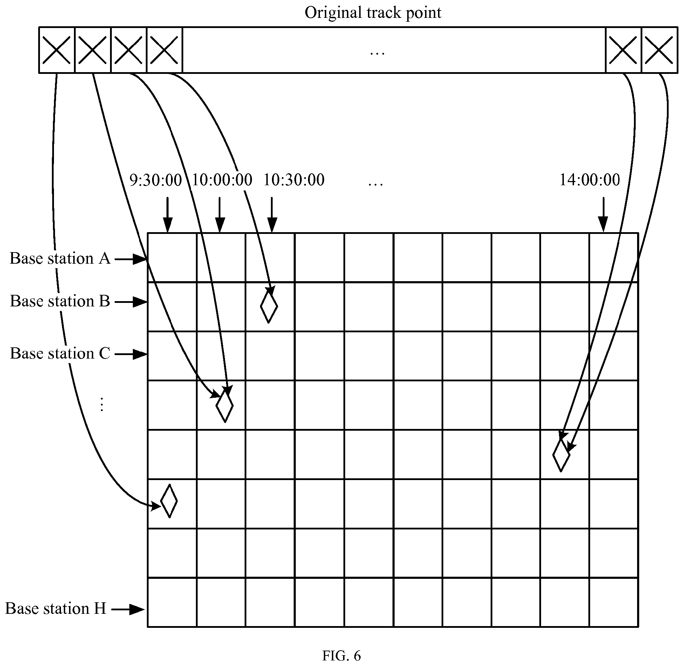

For example, the original track point data shown in FIG. 3 is mapped in the foregoing manner to the two-dimensional matrix shown in FIG. 5, and a result may be shown in FIG. 6, where

a matrix element corresponding to original track point data $x_1$ is $y_{6,1}$ =(a base station F, 9:30:00);
a matrix element corresponding to original track point data $x_2$ is $y_{4,2}$ =(a base station D, 10:00:00);
a matrix element corresponding to original track point data $x_3$ is $y_{4,2}$ =(the base station D, 10:00:00);
a matrix element corresponding to original track point data $x_4$ is $y_{2,3}$ =(a base station B, 10:30:00); and the like. Enumeration one by one is not performed herein.

Optionally, a manner of calculating costs $d_{t,n,p}$ of mapping $x_t$ to $y_{n,p}$ is provided as an example herein, as shown in a formula (3):

$$d_{t,n,p} = w_t \cdot \delta^{(t)}(x_t, y_{n,p}) + w_s \cdot \delta^{(s)}(x_t, y_{n,p}) \quad \text{formula (3)}$$

where $w_s$ represents a spatial costs parameter, and $w_t$ represents a temporal costs parameter, respectively used to adjust spatial and temporal weights, both being 1 in default; $\delta^{(t)}(x_t, y_{n,p})$ represents a temporal distance; and $\delta^{(s)}(x_t, y_{n,p})$ represents a spatial distance.

Manners of calculating $\delta^{(t)}(x_t, y_{n,p})$ and $\delta^{(s)}(x_t, y_{n,p})$ are respectively shown in a formula (4) and a formula (5):

$$\delta^{(t)}(x_t, y_{n,p}) = \left| x_t[t] - y_{n,p}[p] \right| \quad \text{formula (4)}$$

$$\delta^{(s)}(x_t, y_{n,p}) = \left| x_t[lon] - y_{n,p}[lon] \right| + \left| x_t[lat] - y_{n,p}[lat] \right| \quad \text{formula (5)}$$

where both [$t$] and [$p$] represent time points; [$lon$] represents a longitude; and [$lat$] represents a latitude.

It should be noted that, longitude and latitude information of the base station needed by the formula (5) may be a part of the original track point data in the original track point data sequence obtained in step S401, or may be obtained based on the base station identifier in the original track point data in the original track point data sequence obtained in step S401. For example, the user track restoration apparatus pre-stores a correspondence between the base station identifier and the longitude and latitude of the base station, and the longitude and latitude of the base station may be determined based on the correspondence after the base station identifier is obtained. A manner of obtaining the longitude and latitude of the base station is not specifically limited in this embodiment of this application.

Because the temporal and spatial costs are used as an optimization target in this calculation manner, the temporal and spatial costs paid by the original track point data sequence after noise reduction may be the smallest.

Certainly, $\delta^{(t)}(x_t, y_{n,p})$ and $\delta^{(s)}(x_t, y_{n,p})$ may alternatively be calculated in another manner. For example, $\delta^{(s)}(x_t, y_{n,p})$ is calculated in a manner of $\sqrt{(x_t[lon] - y_{n,p}[lon])^2 + (x_t[lat] - y_{n,p}[lat])^2}$. This is not specifically limited in this embodiment of this application.

Step S402 gives a noise reduction solution provided in the embodiments of this application. The noise reduction module 202 in FIG. 2 supports the user track restoration apparatus in performing this step. It can be learned from FIG. 3 that, the collection time point of the original track point data of the user A is an unnormalized time point, in other words, a time interval between two adjacent collection time points of the original track point data is not fixed. It can be learned from FIG. 6 that, after noise reduction is performed by using the noise reduction solution provided in the embodiments of this application, a time point of the noise reduction track point data (namely, a matrix element) of the user A is a normalized time point, in other words, a time interval between two adjacent time points of the original track point data is fixed. It can be learned from FIG. 3 that, the user A is frequently handed over within a time period of a to-be-restored track. It can be learned from FIG. 6 that, after noise reduction is performed by using the noise reduction solution provided in the embodiments of this application, a base station for the frequent handover of the user A may be mapped to a unique base station at a normalized time point. Because a case in which the user A is handed over back and forth between different base stations is eliminated, the noise reduction solution provided in the embodiments of this application can greatly improve data quality and precision after noise reduction. In addition, in this embodiment of this application, an optimal technology is used during the noise reduction, and therefore costs paid by the original track point data sequence after the noise reduction may be the smallest.

S403: The user track restoration apparatus restores, based on the noise reduction track point data sequence, the track of the user whose track is to be restored.

After obtaining the noise reduction track point data sequence, the user track restoration apparatus may obtain, based on the noise reduction track point data sequence and in an existing track restoration manner, the track of the user whose track is to be restored, or may restore, by using the track restoration module 203 shown in FIG. 2, the track of the user whose track is to be restored. This is not specifically limited in this embodiment of this application. A specific solution of restoring, by using the track restoration module 203 shown in FIG. 2, the track of the user whose track is to be restored is described in the following embodiments. Details are not described herein.

According to the user track restoration method provided in this embodiment of this application, the identifier of the base station of the user at the normalized time point may be determined based on the mapping model and the original track point data sequence when the an overall mapping cost isthe smallest, to obtain the noise reduction track point data sequence of the user. Because the normalized time point is the time point of the fixed time interval; and the restrictions of the mapping model include: a piece of original track point data is mapped to a base station identifier of a normalized time point, and the plurality of pieces of original track point data are mapped, at the same normalized time point, to a maximum of one base station identifier, in other words, base stations between which the user is frequently handed over may be mapped to a unique base station of a normalized time point, the case in which the user is handed over between different base stations is eliminated based on the solution, so that the data quality and precision after noise reduction during the track restoration can be greatly improved. In addition, in this embodiment of this application, the optimal technology is used during the noise reduction, and therefore the costs paid by the original track point data sequence after the noise reduction may be the smallest.

As shown in FIG. 6, it is considered that, after the noise reduction, there are many missing values in a time dimension. For example, there is no original track point data mapping at normalized time points such as 11:00:00, 11:30:00, 12:00:00, and 12:30:00, and precision is still not very high if the track of the user whose track is to be restored is obtained in the existing track restoration manner. Therefore, this embodiment of this application further provides a manner of restoring a user track based on the noise reduction track point data, to be specific, restoring the track of the user whose track is to be restored by using the track restoration module 203 shown in FIG. 2. The missing data at the normalized time points is filled in, to form a continuous user track, further greatly improving the user track restoration precision.

The following provides a specific implementation of restoring the track of the user whose track is to be restored by using the track restoration module 203 shown in FIG. 2. Herein, descriptions are provided by using an example in which a user-base station model is a Markov model, and a base station-geographical raster model is a hidden Markov model. First, training processes of the Markov model and the hidden Markov model are provided as follows:

Training process of the Markov model (MM):

It is assumed that, there are N base stations, respectively corresponding to N states in the Markov model. In this case, a parameter that needs to be determined in the training process of the Markov model is a transition probability between the N base stations. The probability of the transition between the N base stations may be expressed by using an N*N matrix. The specific training process may be as follows:

After a plurality of pieces of training data are sorted based on time points included in the training data, a quantity of times of transitions from any one of the N base stations to any one of the N base stations may be determined based on a base station identifier included in the training data, and the probability of the transition between the N base stations may be calculated based on a formula (6):

$$\omega(n1,n2) = \frac{\alpha(n1,n2)}{\sum\limits_{n2=1}^{n2=N} \alpha(n1,n2)} \quad \text{formula (6)}$$

where $\alpha(n1, n2)$ represents a quantity of times of transitions from an $n1^{th}$ base station to an $n2^{th}$ base station in the training data, $\sum\limits_{n2=1}^{n2=N} \alpha(n1,n2)$ represents a total quantity of times of transitions from the $n1^{th}$ base station to the N base stations in training data, and $\omega(n1, n2)$ represents a probability of a transition from the $n1^{th}$ base station to the $n2^{th}$ base station.

For example, it is assumed that, there are three base stations (that is, N=3) A, B, and C, respectively corresponding to the three states in the Markov model. In this case, a parameter that needs to be determined in the training process of the Markov model is a transition probability between the three base stations A, B, and C. The probability of transition between the three base stations A, B, and C may be expressed by using a 3*3 matrix. It is assumed that, in the training data, a total of 600 times of transitions occur between the three base stations A, B, and C, and quantities of times of transitions are shown in Table 3:

**Table 3**

| Initial state \ Target state | A | B | C |
|---|---|---|---|
| A | 132 | 34 | 0 |
| B | 23 | 95 | 78 |
| C | 6 | 88 | 144 |

In this case, for each initial state, the target state is normalized based on the formula (6), and then the training process is completed, to obtain probabilities of transitions between base stations shown in Table 4.

**Table 4**

| Initial state \ Target state | A | B | C |
|---|---|---|---|
| A | 0.8 | 0.2 | 0 |
| B | 0.12 | 0.48 | 0.4 |
| C | 0.03 | 0.37 | 0.6 |

It should be noted that, the training data used in the foregoing training process of the Markov model may be an original track point data sequence in MR data of a user, or may be a noise reduction track point data sequence of a base station granularity after track restoration, for example, a noise reduction track point data sequence of a base station granularity after restoration performed by the track restoration module 203 shown in FIG. 2. This is not specifically limited in this embodiment of this application. Considering that training the Markov model by using the noise reduction track point data sequence of the base station granularity makes a training result of the model more accurate, after some noise reduction track point data sequences of the base station granularity after the track restoration are obtained, these noise reduction track point data sequences of the base station granularity usually may be stored in a user track database of the storage module 204 shown in FIG. 2, to subsequently continuously update the Markov model, so that the training result is more accurate, and precision is higher when the track restoration is subsequently performed.

Training process of the hidden Markov model (HMM):

It is assumed that, there are M geographical rasters, respectively corresponding to M states in the hidden Markov model; and there are N base stations, and there are output probabilities of the N base stations in each geographical raster. In this case, parameters that need to be determined in the training process of the hidden Markov model are a transition probability between the M geographical rasters, and the output probabilities of the N base stations in each geographical raster. The probability of the transition between the M geographical rasters may be expressed by using an M*M matrix; and the output probabilities of the N base stations in each geographical raster may be expressed by using an M*N matrix. The specific training process is as follows:

After a plurality of pieces of training data are sorted based on time points included in the training data, a distance between any one of the M geographical rasters and any one of the M geographical rasters may be determined based on a user longitude and latitude that are in the training data and that are represented by using a geographical raster; and a transition probability between any one of the M geographical rasters and any one of the M geographical rasters is determined according to a preset rule. For example, the preset rule may be that a transition probability between geographical rasters and a distance between geographical rasters are in Gaussian distribution.

After the plurality of pieces of training data are sorted based on the time points included in the training data, a quantity of times of outputting any one of the N base stations in any one of the M geographical rasters may be respectively determined based on the user longitude and latitude that are in the training data and that are represented by using the geographical raster, and a base station identifier; and a probability of outputting any one of the N base stations in any one of the M geographical rasters may be calculated based on a formula (7):

$$\omega(\mathrm{m}, n3) = \frac{\alpha(\mathrm{m}, n3)}{\sum_{n3=1}^{n3=N} \alpha(\mathrm{m}, n3)} \quad \text{formula (7)}$$

where $\alpha(\mathrm{m}, n3)$ represents a quantity of times of outputting an $n3^{th}$ base station in an mth geographical raster in the training data, $\sum_{n3=1}^{n3=N} \alpha(\mathrm{m}, n3)$ represents a total quantity of times of outputting the N base stations in the mth geographical raster in the training data, and $\omega(\mathrm{m}, n3)$ represents a probability of outputting the $n3^{th}$ base station in the mth geographical raster in the training data.

For example, it is assumed that, there are three geographical rasters (that is, M=3) I, II, and III, respectively corresponding to the three states in the hidden Markov model; and there are two base stations (that is, N=2) A and B, and there are output probabilities of the two base stations in each geographical raster. In this case, parameters that need to be determined in the training process of the hidden Markov model are a transition probability between the three geographical rasters I, II, and III, and the output probabilities of the two base stations A and B in each geographical raster. The probability of the transition between the three geographical rasters I, II, and III may be expressed by using a 3*3 matrix; and the output probabilities of the two base stations A and B in each raster may be expressed by using a 3*2 matrix. In the hidden Markov model, a transition probability between geographical rasters may be specified according to a rule. For example, the probability of the transition between geographical rasters and the distance between geographical rasters are in Gaussian distribution. It is assumed that, distances (in meters) between geographical rasters are shown in Table 5:

**Table 5**

| Target state Initial state | I | II | III |
|---|---|---|---|
| I | 0 | 30 | 30 |
| II | 30 | 0 | 42.4 |
| III | 30 | 42.4 | 0 |

A definition of the Gaussian distribution is shown in a formula (8), and is decided by two parameters ($\mu, \sigma$):

$$f(\mathrm{x}) = \frac{1}{\sigma\sqrt{2\pi}} e^{-\frac{(\mathrm{x}-\mu)^2}{2\sigma^2}} \quad \text{formula (8)}$$

It is assumed that an average value $\mu = 0$, and a standard deviation $\sigma = 50$. In this case, each distance in Table 5 in the foregoing is separately substituted in the formula (8), to obtain probabilities of transitions between geographical rasters shown in Table 6:

**Table 6**

| Target state Initial state | I | II | III |
|---|---|---|---|
| I | 0.00797885 | 0.00666449 | 0.00666449 |
| II | 0.00666449 | 0.00797885 | 0.00556915 |
| III | 0.00666449 | 0.00556915 | 0.00797885 |

Because the probability of the transition between geographical rasters shown in Table 6 is not a normalized transition probability, for each initial state, the target state is normalized, to obtain probabilities of transitions between geographical rasters shown in Table 7.

**Table 7**

| Target state Initial state | I | II | III |
|---|---|---|---|
| I | 0.37 | 0.31 | 0.31 |
| II | 0.33 | 0.39 | 0.28 |
| III | 0.33 | 0.28 | 0.39 |

It is assumed that, in the training data, quantities of times of outputting the two base stations A and B in the three geographical rasters I, II, and III are shown in Table 8:

**Table 8**

| Base station<br>Geographical raster | A | B |
|---|---|---|
| I | 55 | 187 |
| II | 12 | 43 |
| III | 143 | 34 |

In this case, for each geographical raster, a base station that is output in the geographical raster is normalized based on the formula (7), and the training process is completed, to obtain probabilities of outputting base stations in geographical rasters shown in Table 9:

**Table 9**

| Base station<br>Geographical raster | A | B |
|---|---|---|
| I | 0.23 | 0.77 |
| II | 0.22 | 0.78 |
| III | 0.81 | 0.19 |

It should be noted that, the training data used in the foregoing training process of the hidden Markov model may be an original track point data sequence in MR data of a user and OTT data corresponding to the MR data, or may be a noise reduction track point data sequence of a geographical raster granularity after track restoration, for example, a noise reduction track point data sequence of a geographical raster granularity after restoration performed by the track restoration module 203 shown in FIG. 2. This is not specifically limited in this embodiment of this application. The original track point data in the MR data includes an identifier of the user, an identifier of a connected base station when a current communication behavior of the user occurs, and a collection time point of the MR data. The OTT data includes the identifier of the user, a collection time point, and a longitude and a latitude of the user. The MR data is associated with the OTT data by using the identifier of the user and the collection time points. Considering that training the hidden Markov model by using the noise reduction track point data sequence of the geographical raster granularity makes a training result of the model more accurate, after some noise reduction track point data sequences of the geographical raster granularity after the track restoration are obtained, these noise reduction track point data sequences of the geographical raster granularity usually may be stored in a user track database of the storage module 204 shown in FIG. 2, to subsequently continuously update the hidden Markov model, so that the training result is more accurate, and precision is higher when the track restoration is subsequently performed.

After the Markov model and the hidden Markov model are trained based on the foregoing method, the trained Markov model and hidden Markov model in the foregoing may be stored in the track restoration module 203 shown in FIG. 2, and after the noise reduction module 202 outputs the noise reduction track point data sequence, the track restoration module 203 may restore the user track based on the trained Markov model and hidden Markov model. The process of restoring the user track is a process of filling the missing data at the normalized time points, to form a continuous user track. Specifically, descriptions are provided as follows:

First, a process of track restoration based on the Markov model (MM) is provided:
An input of the Markov model is the noise reduction track point data sequence that is output by the noise reduction module 202.

An output of the Markov model is the noise reduction track point data sequence of the base station granularity.

The track restoration process for the Markov model includes: obtaining the base station identifier and the normalized time point included in the noise reduction track point data in the noise reduction track point data sequence that is output by the noise reduction module 202; determining, based on the normalized time point, a normalized time point included in missing track point data in the noise reduction track point data sequence; based on the parameter of the Markov model, namely, the probability of the transition between the N base station, and with reference to the formula (9), determining a transition probability of a first complete path constituted, at the normalized time point included in the missing track point data and when the base station of the user corresponds to any one of the N base stations, by a base station corresponding to a base station identifier included in the missing track point data and the base station corresponding to the base station identifier included in the noise reduction track point data, and determining a plurality of base stations on a path whose transition probability of the first complete path is the largest as base stations that are of the user whose track is to be restored and that are at different normalized time points; and determining, based on the base stations that are of the user whose track is to be restored and that are at the different normalized time points, the noise reduction track point data sequence of the base station granularity of the user whose track is to be restored.

The transition probability of the first complete path=a product of probabilities of transitions between base stations on the first complete path formula (9)

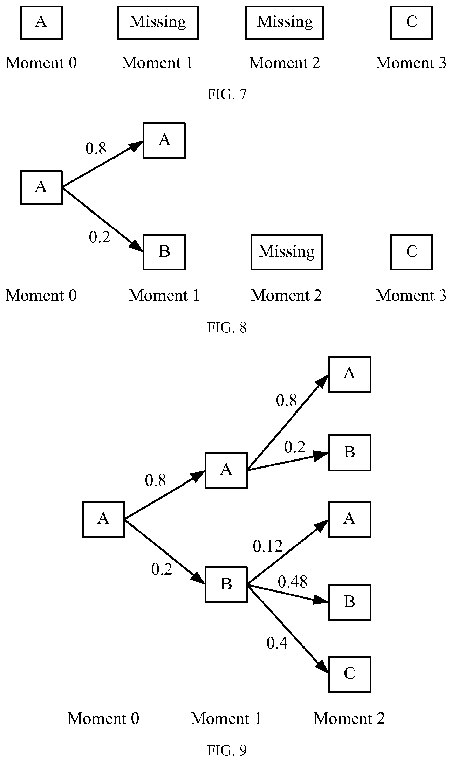

For example, it is assumed that the probabilities of the transitions between the base stations are shown in Table 4, and it is assumed that a schematic diagram of distribution, at a normalized time point, of a base station corresponding to a noise reduction track point that is obtained after the noise reduction performed by the noise reduction module 202 is shown in FIG. 7, respectively: at a moment 0, there is a piece of corresponding noise reduction track point data, and a base station identifier in the noise reduction track point data is a base station A; at a moment 1 and a moment 2, track point data is missing; and at a moment 3, there is a piece of corresponding noise reduction track point data, and a base station identifier in the noise reduction track point data is a base station C. In this case, track restoration may be performed in the following manner, to obtain a noise reduction track point data sequence of a base station granularity:

First, a state transition is performed from each possible state based on Table 4 and from the moment 0. For example, in Table 4, when the initial state is the base station A, a transition probability from a base station A to a base station A is 0.8, a transition probability from a base station A to a base station B is 0.2, and a transition probability from a base station A to a base station C is 0. Therefore, after the state transition is performed from each possible state from the moment 0, a result is shown in FIG. 8. To be specific, from the moment 0, there are two branches: one is a transition to a base station A at the moment 1, the other is a transition to a base station B at the moment 1. Transition probabilities are respectively 0.8 and 0.2.

Second, based on Table 4, from the moment 1, a state transition is performed again from each possible state, and a result is shown in FIG. 9. Specifically, refer to the process of performing the state transition at the moment 0. Details are not described herein again.

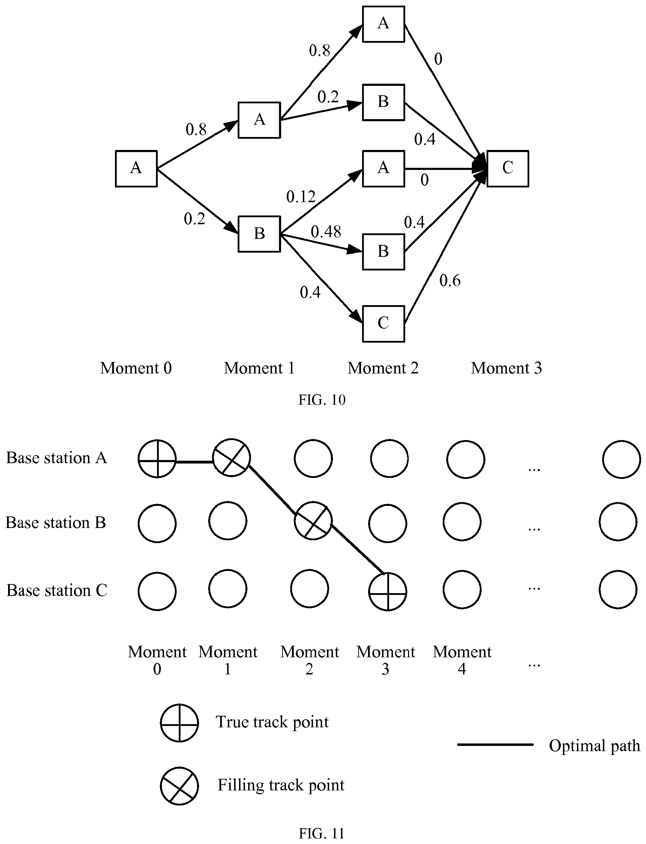

Then, based on Table 4, from the moment 2, a state transition is performed again from each possible state, to transition to a base station C, and a result is shown in FIG. 10. Specifically, refer to the process of performing the state transition at the moment 0. Details are not described herein again.

Finally, for each path that is from a base station A to a base station C and that is shown in FIG. 10, all transition probabilities on the path are multiplied together, to obtain a list of transition probabilities, as shown in Table 10:

**Table 10**

| Transition path | Transition probability from a base station A to a base station C |
| --- | --- |
| Base station A-base station A-base station A-base station C | $0.8\times0.8\times0=0$ |
| Base station A-base station A-base station B-base station C | $0.8\times0.2\times0.4=0.064$ |
| Base station A-base station B-base station A-base station C | $0.2\times0.12\times0=0$ |
| Base station A-base station B-base station B-base station C | $0.2\times0.48\times0.4=0.0384$ |
| Base station A-base station B-base station C-base station C | $0.2\times0.4\times0.6=0.048$ |

Then, a base station on a path whose transition probability is the largest may be determined as a base station of the user A at different normalized time points. For example, it can be educed from Table 10 that, when the transition path is base station A-base station A-base station B-base station C, a transition probability from a base station A to a base station C is the largest, and is 0.064. Therefore, it can be determined that a corresponding base station of the user A at the moment 1 is a base station A, a corresponding base station at the moment 2 is a base station B, and a user track of the base station granularity after the track restoration is shown in FIG. 11.

Because the noise reduction track point data sequence of the base station granularity restored based on the track restoration method has a highest state transition probability, the user track restoration precision can be greatly improved.

Second, a process of track restoration based on the hidden Markov model (HMM) is provided:

An input of the hidden Markov model is the noise reduction track point data sequence of the base station granularity that is output by the Markov model.

An output of the hidden Markov model is the noise reduction track point data sequence of the geographical raster granularity.

The track restoration process for the hidden Markov model includes: obtaining the base station identifier and the normalized time point included in the noise reduction track point data in the noise reduction track point data sequence of the base station granularity that is output by the Markov model; with reference to a formula (10) and based on each base station identifier, a normalized time point, and a transition probability between M geographical rasters in the hidden Markov model, and output probabilities of the N base stations in each geographical raster, determining that a transition probability of a second complete path connected to all geographical rasters of a base station corresponding to the normalized time point can be output at each normalized time point; determining a plurality of geographical rasters on a path whose transition probability of the second complete path is the largest as geographical rasters that are of the user whose track is to be restored and that are at different normalized time points; and determining, based on the geographical rasters that are of the user whose track is to be restored and that are at the different normalized time points, the noise reduction track point data sequence of the geographical raster granularity of the user whose track is to be restored.

$$ P = Y_{1,1} * X_{1,2} * Y_{2,2} * ... * X_{r,r+1} * Y_{r+1,r+1} \cdots \quad \text{formula (10)} $$

where $Y_{r+1,r+1}$ represents a probability of outputting a base station at an $r+1$th normalized time point in a geographical raster at the $r+1$th normalized time point on the second complete path; and $X_{r,r+1}$ represents a transition probability between a geographical raster at an $r$th normalized time point on the second complete path and the geographical raster at the $r+1$th normalized time point.

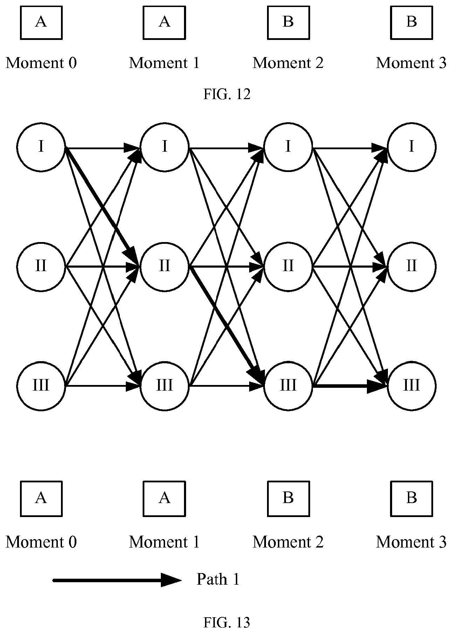

For example, it is assumed that, probabilities of transitions between geographical rasters in the hidden Markov model are shown in Table 7, and probabilities of outputting base stations in geographical rasters are shown in Table 9. In addition, it is assumed that, distribution of output of a base station in a geographical raster is shown in FIG. 12, respectively: a base station A is output at the moment 0 and the moment 1, and a base station B is output at the moment 2 and the moment 3. In this case, numbers of geographical rasters of the user A at different normalized time points may be predicted in the following manner, to obtain the noise reduction track point data sequence of the geographical raster granularity:

First, all possible states (namely, geographical rasters) in which these observation values can be output are separately enumerated based on Table 9 from the moment 0, and all possible state transition paths are connected, specifically as shown in FIG. 13. The observation value sequence in FIG. 12 may be output along all these possible paths.

Second, a transition probability of each complete path is separately calculated. Herein, descriptions are provided by using a path 1 in FIG. 13 as an example. In this case, a transition probability of the path 1 may be obtained based on the formula (10):

$$ P = Y_{I,A} * X_{I,II} * Y_{II,A} * X_{II,III} * Y_{III,B} * X_{III,III} * Y_{III,B} $$
$$ = 0.23 * 0.31 * 0.22 * 0.28 * 0.19 * 0.39 * 0.19 = 6.2 * 10^{-5} $$

Similarly, transition probabilities of all possible paths can be calculated based on the formula (10), and a path whose transition probability is the largest in all the possible paths can be determined. Identifiers of geographical rasters on this path are determined as identifiers of the geographical rasters of the user A at the different normalized time points. For example, if the path whose probability is the largest is geographical raster III-geographical raster III-geographical raster II-geographical raster I, it may be determined that a geographical raster of the user A at the moment 0 is a geographical raster III, a geographical raster at the moment 1 is a geographical raster III, a geographical raster at the moment 2 is a geographical raster II, and a geographical raster at the moment 3 is a geographical raster I, and a user track of the geographical raster granularity can be obtained.

Because the noise reduction track point data sequence of the geographical raster granularity restored based on the track restoration method has a highest state transition probability, and the geographical raster granularity is smaller than the base station granularity, the user track restoration precision can be greatly improved.

The foregoing embodiments mainly describe, with reference to the user track restoration apparatus shown in FIG. 2, the user track restoration method provided in the embodiments of this application. It may be understood that, to implement the foregoing functions, the user track restoration apparatus includes a corresponding hardware structure and/or software module for performing each of the functions. Persons of ordinary skill in the art should easily be aware that, in combination with the examples described in the embodiments disclosed in this specification, units, algorithms steps may be implemented by hardware or a combination of hardware and computer software. Whether a function is performed by hardware or hardware driven by computer software depends on particular applications and design constraints of the technical solutions. The persons skilled in the art may use different methods to implement the described functions for each particular application, but it should not be considered that the implementation goes beyond the scope of this application.

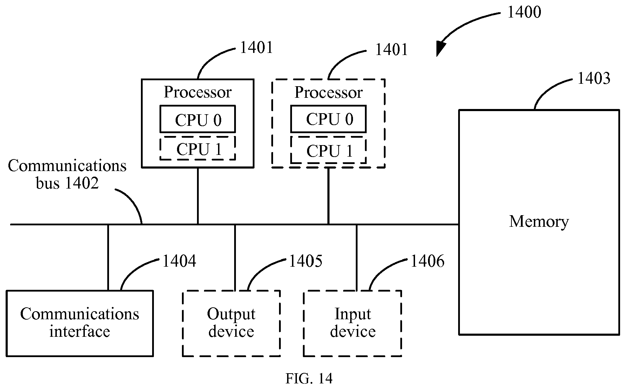

FIG. 14 is a schematic structural diagram of hardware of a user track restoration apparatus 1400 according to an embodiment of this application. The user track restoration apparatus 1400 includes a processor 1401, a communications bus 1402, and a communications interface 1404.

The processor 1401 may be a general-purpose processor, such as a central processing unit (CPU), a network processor (NP), or a combination of a CPU or an NP. The processor 1401 may alternatively be a microprocessor (MCU), an application-specific integrated circuit (ASIC), a programmable logic device (PLD), or a combination thereof. The PLD may be a complex programmable logic device (CPLD), a field-programmable gate array (FPGA), a generic array logic (GAL for short), or any combination thereof.

The communications bus 1402 may include a path for transmitting information between the foregoing components.

The communications interface 1404 is configured to communicate with another device or a communications network by using an apparatus such as a transceiver, and may include an Ethernet interface, a radio access network (RAN) interface, a wireless local area network (WLAN) interface, and the like.

Optionally, as shown in FIG. 14, the user track restoration apparatus 1400 may further include a memory 1403. The memory 1403 may include a volatile memory, such as a random-access memory (RAM). The memory may alternatively include a non-volatile memory, such as a flash memory, a hard disk (HDD), or a solid-state drive (SSD). The memory 1403 may alternatively include a combination of memories of the foregoing types.

The memory 1403 is configured to store program code. The processor 1401 is configured to execute the program code stored in the memory 1403, thereby implementing the user track restoration method in FIG. 4.

During specific implementation, the processor 1401 may include one or more CPUs, such as a CPU 0 and a CPU 1 in FIG. 14. A CPU may be a single-core CPU, or may be a multi-core CPU.

During specific implementation, in an embodiment, the user track restoration apparatus 1400 may further include an output device 1405 and an input device 1406. The output device 1405 communicates with the processor 1401, and may display information in a plurality of manners. For example, the output device 1405 may be a liquid crystal display (LCD), a light emitting diode (LED) display device, a cathode ray tube (CRT) display device, a projector, or the like. The input device 1406 communicates with the processor 1401, and may receive an input of a user in a plurality of manners. For example, the input device 1406 may be a mouse, a keyboard, a touchscreen device, a sensing device, or the like.

The foregoing user track restoration apparatus 1400 may be a general-purpose computer device or a dedicated computer device. During specific implementation, the user track restoration apparatus 1400 may be a desktop computer, a portable computer, a network server, a palmtop computer (PDA), a mobile phone, a tablet computer, a wireless terminal device, an embedded device, or a device having a structure similar to that in FIG. 14. A type of the user track restoration apparatus 1400 is not limited in this embodiment of this application.

The user track restoration apparatus provided in this embodiment of this application may be configured to perform the foregoing user track restoration method. Therefore, for a technical effect that can be obtained by the user track restoration apparatus, refer to the foregoing method embodiments. Details are not described herein again in this embodiment of this application.

All or some of the foregoing embodiments may be implemented by means of software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

Although this application is described with reference to the embodiments, in a process of implementing this application that claims protection, persons skilled in the art may understand and implement another variation of the disclosed embodiments by viewing the accompanying drawings, disclosed content, and the accompanying claims. In the claims, "including" (including) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, apparently, various modifications and combinations may be made to them without departing from the scope of this application. Correspondingly, the specification and accompanying drawings are merely example description of this application defined by the accompanying claims, and is considered as any of or all modifications, variations, combinations or equivalents that cover the scope of this application. Apparently, the persons skilled in the art can make various modifications and variations to this application without departing from the scope of this application. This application is intended to cover these modifications and variations of this application provided that they fall within the scope of protection defined by the following claims and their equivalent technologies.

**Claims**

1. A user track restoration method performed by a user track restoration apparatus, wherein the method comprises:

    • obtaining an original track point data sequence of a user whose track is to be restored, wherein each piece of original track point data in the original track point data sequence comprises a base station identifier and a collection time point that correspond to the original track point data (S 401);
    • determining an identifier of a base station of the user at a normalized time point based on a mapping model and the original track point data sequence when an overall mapping cost is the smallest, to obtain a noise reduction track point data sequence of the user, wherein each piece of noise reduction track point data in the noise reduction track point data sequence comprises a base station identifier and a normalized time point that correspond to the noise reduction track point data; the normalized time point is a time point of a fixed time interval; and restrictions of the mapping model comprise: a piece of original track point data is mapped to a base station identifier of a normalized time point, and a plurality of pieces of original track point data are mapped, at a same normalized time point, to a maximum of one base station identifier (S 402); and
    • restoring, based on the noise reduction track point data sequence, the track of the user whose track is to be restored (S 403),
    wherein the restoring, based on the noise reduction track point data sequence, the track of the user whose track is to be restored comprises:

    ∘ determining a noise reduction track point data sequence of a base station granularity of the user based on the noise reduction track point data sequence and a pre-trained user-base station model, wherein a parameter of the user-base station model comprises: a transition probability between N base stations, wherein N is a quantity of identifiers of different base stations comprised in the original track point data sequence; and
    ∘ restoring, based on the noise reduction track point data sequence of the base station granularity, the track of the user whose track is to be restored,

    wherein the method further comprises the steps of:

    • obtaining a plurality of pieces of first training data for training the user-base station model, wherein each of the plurality of pieces of first training data comprises the base station identifier and the collection time point;
    • determining, based on each piece of the first training data, a quantity of times of transitions from any one of the N base stations to any one of the N base stations; and
    • determining the probability of the transition between the N base stations based on a first preset formula and the quantity of times of transitions from any one of the N base stations to any one of the N base stations, wherein the first preset formula comprises:

$$\omega(n1, n2) = \frac{\alpha(n1, n2)}{\sum_{n2=1}^{n2=N} \alpha(n1, n2)},$$

wherein $\alpha(n1, n2)$ represents a quantity of times of transitions from an n1[th] base station to an n2[th] base station,

$\sum_{n2=1}^{n2=N} \alpha(n1, n2)$ represents a total quantity of times of transitions from the n1[th] base station to the N base

stations, and $\omega(n1, n2)$ represents a probability of a transition from the n1[th] base station to the n2[th] base station.

2. The method according to claim 1, wherein the determining the noise reduction track point data sequence of the base station granularity of the user based on the noise reduction track point data sequence and the pre-trained user-base station model comprises:

determining, based on the normalized time point comprised in the noise reduction track point data in the noise reduction track point data sequence, a normalized time point comprised in missing track point data in the noise reduction track point data sequence;
based on the probability of the transition between the N base stations and a second preset formula, determining a transition probability of a first complete path constituted, at the normalized time point comprised in the missing track point data and when the base station of the user corresponds to any one of the N base stations, by a base station corresponding to a base station identifier comprised in the missing track point data and a base station corresponding to a base station identifier comprised in the noise reduction track point data, wherein the second preset formula is: the transition probability of the first complete path=a product of probabilities of transitions between base stations on the first complete path;
determining a plurality of base stations on a path whose transition probability of the first complete path is the largest as base stations that are of the user whose track is to be restored and that are at different normalized time points; and
determining, based on the base stations that are of the user whose track is to be restored and that are at the different normalized time points, the noise reduction track point data sequence of the base station granularity of the user whose track is to be restored.

3. The method according to any one of claims 1 to 2, wherein the user-base station model is a Markov model.

4. A user track restoration apparatus configured to perform any of the methods according to claims 1 to 3.

5. A computer program product comprising computer program instructions that when executed by a processing apparatus cause the processing apparatus to perform the any of the methods according to claims 1 to 3.

**Patentansprüche**

1. Verfahren zum Wiederherstellen einer Benutzerwegstrecke, das mithilfe einer Vorrichtung zum Wiederherstellen einer Benutzerwegstrecke ausgeführt wird, wobei das Verfahren umfasst:

• Erhalten einer ursprünglichen Datensequenz von Wegstreckenpunkten eines Benutzers, dessen Wegstrecke wiederhergestellt werden soll, wobei jedes Element der ursprünglichen Wegstreckenpunktdaten in der ursprünglichen Datensequenz von Wegstreckenpunkten eine Basisstationskennung und einen Erfassungszeitpunkt umfasst, die den ursprünglichen Wegstreckenpunktdaten entsprechen (S 401);
• Ermitteln einer Kennung einer Basisstation des Benutzers zu einem normalisierten Zeitpunkt aufgrund eines Zuordnungsmodells und der ursprünglichen Datensequenz der Wegstreckenpunkte, wenn ein Gesamtzuordnungsaufwand am kleinsten ist, um eine rauschreduzierte Datensequenz der Wegstreckenpunkte des Benutzers zu erhalten, wobei jedes Element der rauschreduzierten Wegstreckenpunktdaten in der rauschreduzierten Datensequenz von Wegstreckenpunkten eine Basisstationskennung und einen normalisierten Zeitpunkt umfasst, die den rauschreduzierten Wegstreckenpunktdaten entsprechen; wobei der normalisierte Zeitpunkt ein Zeitpunkt eines festen Zeitintervalls ist; und wobei zu den Einschränkungen des Zuordnungsmodells gehören: ein Element der ursprünglichen Wegstreckenpunktdaten, das einer Basisstationskennung eines normalisierten Zeitpunkts zugeordnet ist, und eine Vielzahl von Elementen der ursprünglichen Wegstreckenpunktdaten, die für einen gleichen normalisierten Zeitpunkt einem Maximalwert einer Basisstationskennung zugeordnet sind (S 402); und

• Wiederherstellen, aufgrund der rauschreduzierten Datensequenz von Wegstreckenpunkten, der Wegstrecke des Benutzers, dessen Wegstrecke wiederhergestellt werden soll (S 403),

wobei das Wiederherstellen, aufgrund der rauschreduzierten Datensequenz von Wegstreckenpunkten, der Wegstrecke des Benutzers, dessen Wegstrecke wiederhergestellt werden soll, umfasst:

◦ Ermitteln einer rauschreduzierten Datensequenz von Wegstreckenpunkten einer Basisstationsgranularität des Benutzers aufgrund der rauschreduzierten Datensequenz von Wegstreckenpunkten und eines zuvor erlernten Benutzer-Basisstation-Modells, wobei ein Parameter des Benutzer-Basisstation-Modells umfasst: eine Übergangswahrscheinlichkeit zwischen N Basisstationen, wobei N eine Anzahl von Kennungen von verschiedenen Basisstationen ist, die in der ursprünglichen Datensequenz der Wegstreckenpunkte enthalten sind; und

◦ Wiederherstellen, aufgrund der rauschreduzierten Datensequenz der Basisstationsgranularität, der Wegstrecke des Benutzers, dessen Wegstrecke wiederhergestellt werden soll,

wobei das Verfahren außerdem die folgenden Schritte umfasst:

• Erhalten einer Vielzahl von Elementen von ersten Trainingsdaten zum Erlernen des Benutzer-Basisstation-Modells, wobei jedes aus der Vielzahl von Elementen der ersten Trainingsdaten die Basisstationskennung und den Erfassungszeitpunkt umfasst;

• Ermitteln, aufgrund von jedem Element der ersten Trainingsdaten einer Häufigkeit von Übergängen von einer der N Basisstationen zu einer anderen der N Basisstationen; und

• Ermitteln der Wahrscheinlichkeit des Übergangs zwischen den N Basisstationen aufgrund einer ersten voreingestellten Formel und aufgrund der Häufigkeit von Übergängen von einer beliebigen der N Basisstationen zu einer anderen der N Basisstationen, wobei die erste voreingestellte Formel umfasst:

$$\omega(n1, n2) = \frac{\alpha(n1,n2)}{\sum_{n2=1}^{n2=N} \alpha(n1,n2)},$$

wobei $\alpha(n1, n2)$ eine Häufigkeit von Übergängen von einer nl-ten Basisstation zu einer n2-ten Basisstation darstellt, $\sum_{n2=1}^{n2=N} \alpha(n1, n2)$ eine Gesamthäufigkeit von Übergängen von der nl-ten Basisstation zu den N Basisstationen darstellt, und $\omega(n1, n2)$ eine Wahrscheinlichkeit von Übergängen von der nl-ten Basisstation zur n2-ten Basisstation darstellt.

2. Verfahren nach Anspruch 1, wobei das Ermitteln der rauschreduzierten Datensequenz von Wegstreckenpunkten der Basisstationsgranularität des Benutzers aufgrund der rauschreduzierten Datensequenz von Wegstreckenpunkten und eines zuvor erlernten Benutzer-Basisstation-Modells umfasst:

Ermitteln, aufgrund des normalisierten Zeitpunkts, der in den rauschreduzierten Wegstreckenpunktdaten in der rauschreduzierten Datensequenz der Wegstreckenpunkte enthalten ist, eines normalisierten Zeitpunkts, der in fehlenden Wegstreckenpunktdaten in der rauschreduzierten Datensequenz der Wegstreckenpunkte enthalten ist;

aufgrund der Wahrscheinlichkeit des Übergangs zwischen den N Basisstationen und aufgrund einer zweiten voreingestellten Formel, Ermitteln einer Übergangswahrscheinlichkeit eines ersten vollständigen Pfads, der an dem normalisierten Zeitpunkt gegeben ist, der in den fehlenden Wegstreckenpunktdaten enthalten ist, und wenn die Basisstation des Benutzers einer der N Basisstationen entspricht, durch eine Basisstation, die einer Basisstationskennung entspricht, die in den fehlenden Wegstreckenpunktdaten enthalten ist, und durch eine Basisstation, die einer Basisstationskennung entspricht, die in den rauschreduzierten Wegstreckenpunktdaten enthalten ist, wobei die zweite voreingestellte Formel lautet:

die Übergangswahrscheinlichkeit des ersten vollständigen Pfads = ein Produkt von Wahrscheinlichkeiten von Übergängen zwischen Basisstationen auf dem ersten vollständigen Pfad;

Ermitteln einer Vielzahl von Basisstationen auf einem Pfad, dessen Übergangswahrscheinlichkeit in dem ersten vollständigen Pfad die Größte ist, als Basisstationen, die zu dem Benutzer gehören, dessen Wegstrecke wiederhergestellt werden soll, und die zu verschiedenen normalisierten Zeitpunkten gehören; und Ermitteln, aufgrund der Basisstationen, die zu dem Benutzer gehören, dessen Wegstrecke wiederhergestellt werden soll, und die zu verschiedenen normalisierten Zeitpunkten gehören, der rauschreduzierten Datensequenz von Wegstreckenpunkten der Basisstationsgranularität des Benutzers, dessen Wegstrecke wiederhergestellt werden soll.

3. Verfahren nach einem der Ansprüche 1 bis 2, wobei das Benutzer-Basisstation-Modell ein Markov-Modell ist.

4. Vorrichtung zum Wiederherstellen einer Benutzerwegstrecke, die konfiguriert ist zum Ausführen eines der Verfahren nach einem der Ansprüche 1 bis 3.

5. Computerprogrammprodukt, das Computerprogrammbefehle umfasst, die, wenn sie von einer Verarbeitungsvorrichtung ausgeführt werden, die Verarbeitungsvorrichtung veranlassen, eines der Verfahren nach einem der Ansprüche 1 bis 3 auszuführen.

## Revendications

1. Procédé de restauration de parcours d'utilisateur réalisé par un appareil de restauration de parcours d'utilisateur, le procédé comprenant les étapes consistant à :

• obtenir une séquence de données de point de parcours d'origine d'un utilisateur dont le parcours doit être restauré, chaque élément de donnée de point de parcours d'origine dans la séquence de données de point de parcours d'origine comprenant un identifiant de station de base et un moment de collecte qui correspondent aux données de point de parcours d'origine (S401) ;
• déterminer un identifiant d'une station de base de l'utilisateur à un moment normalisé sur la base d'un modèle de concordance et de la séquence de données de point de parcours d'origine quand un coût de concordance global est le minimum, afin d'obtenir une séquence de données de point de parcours de réduction de bruit de l'utilisateur, chaque élément de donnée de point de parcours de réduction de bruit dans la séquence de données de point de parcours de réduction de bruit comprenant un identifiant de station de base et un moment normalisé qui correspondent aux données de point de parcours de réduction de bruit ; le moment normalisé étant un moment d'un intervalle de temps fixe ; et des restrictions du modèle de concordance comprenant : un élément de donnée de point de parcours d'origine est mis en concordance avec un identifiant de station de base d'un moment normalisé, et une pluralité d'éléments de donnée de point de parcours d'origine sont mis en concordance, à un même moment normalisé, avec un maximum d'un identifiant de station de base (S402) ; et
• restaurer, sur la base de la séquence de données de point de parcours de réduction de bruit, le parcours de l'utilisateur dont le parcours doit être restauré (S403),

la restauration, sur la base de la séquence de données de point de parcours de réduction de bruit, du parcours de l'utilisateur dont le parcours doit être restauré comprenant les étapes consistant à :

• déterminer une séquence de données de point de parcours de réduction de bruit d'une granularité de stations de base de l'utilisateur sur la base de la séquence de données de point de parcours de réduction de bruit et d'un modèle utilisateur-station de base pré-appris, un paramètre du modèle utilisateur-station de base comprenant : une probabilité de transition entre N stations de base, N étant un nombre d'identifiants de différentes stations de base comprises dans la séquence de données de point de parcours d'origine ; et
• restaurer, sur la base de la séquence de données de point de parcours de réduction de bruit de la granularité de stations de base, le parcours de l'utilisateur dont le parcours doit être restauré,

le procédé comprenant en outre les étapes consistant à :

• obtenir une pluralité d'éléments de première donnée d'apprentissage pour entraîner le modèle utilisateur-station de base, chaque élément de la pluralité d'éléments de première donnée d'apprentissage comprenant l'identifiant de station de base et le moment de collecte ;
• déterminer, sur la base de chaque élément de la première donnée d'apprentissage, un nombre de transitions d'une quelconque des N stations de base à une quelconque des N stations de base ; et
• déterminer la probabilité de la transition entre les N stations de base sur la base d'une première formule prédéfinie et du nombre de transitions d'une quelconque des N stations de base à une quelconque des N stations de base, la première formule prédéfinie comprenant :

$$\omega(n1, n2) = \frac{\alpha(n1,n2)}{\sum_{n2=1}^{n2=N} \alpha(n1,n2)},$$

où $\alpha(n1, n2)$ représente un nombre de transitions d'une n1e station de base à une n2e station de base, $\sum_{n2=1}^{n2=N} \alpha(n1, n2)$ représente un nombre total de transitions de la n1e station de base aux N stations de base, et $\omega(n1, n2)$ représente une probabilité de transition de la n1e station de base à la n2e station de base.

**2.** Procédé selon la revendication 1, dans lequel la détermination de la séquence de données de point de parcours de réduction de bruit de la granularité de stations de base de l'utilisateur sur la base de la séquence de données de point de parcours de réduction de bruit et du modèle utilisateur-station de base pré-appris comprend les étapes consistant à :

déterminer, sur la base du moment normalisé compris dans les données de point de parcours de réduction de bruit dans la séquence de données de point de parcours de réduction de bruit, un moment normalisé compris dans des données de point de parcours manquantes dans la séquence de données de point de parcours de réduction de bruit ;
sur la base de la probabilité de la transition entre les N stations de base et d'une seconde formule prédéfinie, déterminer une probabilité de transition d'un premier chemin complet constitué, au moment normalisé compris dans les données de point de parcours manquantes et quand la station de base de l'utilisateur correspond à l'une quelconque des N stations de base, par une station de base correspondant à un identifiant de station de base compris dans les données de point de parcours manquantes et une station de base correspondant à un identifiant de station de base compris dans les données de point de parcours de réduction de bruit, la seconde formule prédéfinie étant : la probabilité de transition du premier chemin complet=un produit de probabilités de transitions entre des stations de base sur le premier chemin complet ;
déterminer, sur un chemin dont la probabilité de transition du premier chemin complet est la maximale, une pluralité de stations de base en guise de stations de base qui sont de l'utilisateur dont le parcours doit être restauré et qui sont à différents moments normalisés ; et
déterminer, sur la base des stations de base qui sont de l'utilisateur dont le parcours doit être restauré et qui sont aux différents moments normalisés, la séquence de données de point de parcours de réduction de bruit de la granularité de stations de base de l'utilisateur dont le parcours doit être restauré.

**3.** Procédé selon l'une quelconque des revendications 1 et 2, dans lequel le modèle utilisateur-station de base est un modèle de Markov.

**4.** Appareil de restauration de parcours d'utilisateur, configuré pour réaliser l'un quelconque des procédés selon les revendications 1 à 3.

**5.** Produit de programme informatique comprenant des instructions de programme informatique qui, lorsqu'elles sont exécutées par un appareil de traitement, amènent l'appareil de traitement à réaliser l'un quelconque des procédés selon les revendications 1 à 3.

FIG. 1

**Original data on a carrier side**

| OTT data | A-interface signaling data | CDR data | MR data |
|---|---|---|---|

20

**User track restoration apparatus**

Obtaining module — 201

Training

Original track point data sequence

Training

Noise reduction module — 202

Noise reduction track point data sequence

**Track restoration module** — 203

| User-base station model | → | Base station-geographical raster model |
|---|---|---|

Noise reduction track point data sequence of a base station granularity

Noise reduction track point data sequence of a geographical raster granularity

Training

**Storage module** — 204

User track database

Service and marketing support

FIG. 2

Original track point

$$\boxed{\times}\boxed{\times}\boxed{\times}\boxed{\times}\quad\boxed{\phantom{xxxxxxxxxxxxxxxx}\cdots\phantom{xxxxxxxxxxxxxxxx}}\quad\boxed{\times}\boxed{\times}$$

Original track
point data
sequence

$x_1$ = [Base station A, 10:03:37, 121.46472, 31.08572]

$x_2$ = [Base station B, 10:14:25, 121.46253, 31.08744]

$x_3$ = [Base station A, 10:19:25, 121.46472, 31.08572]

$x_4$ = [Base station C, 10:39:10, 121.46752, 31.08572]

$\vdots$

FIG. 3

Start

A user track restoration apparatus obtains an original track point data sequence of a user whose track is to be restored — S401

The user track restoration apparatus determines an identifier of a base station of the user at a normalized time point based on a mapping model and the original track point data sequence when overall mapping costs are the smallest, to obtain a noise reduction track point data sequence of the user — S402

The user track restoration apparatus restores, based on the noise reduction track point data sequence, the track of the user whose track is to be restored — S403

End

FIG. 4

9:30:00  10:00:00  10:30:00  ⋯                                    14:00:00

Base station A →

Base station B →

Base station C →

⋮

Base station H →

$y_{1,1}$ = (Base station 1, 9:30:00)

FIG. 5

FIG. 6

| A | | Missing | | Missing | | C |
|---|---|---|---|---|---|---|
| Moment 0 | | Moment 1 | | Moment 2 | | Moment 3 |

FIG. 7

```
              0.8      ┌───┐
                    →  │ A │
                       └───┘
    ┌───┐
    │ A │
    └───┘
              0.2      ┌───┐        ┌─────────┐      ┌───┐
                    →  │ B │        │ Missing │      │ C │
                       └───┘        └─────────┘      └───┘
```

| Moment 0 | Moment 1 | Moment 2 | Moment 3 |
|---|---|---|---|

FIG. 8

```
                                          0.8    ┌───┐
                                             →   │ A │
                                                 └───┘
                          ┌───┐    0.2    ┌───┐
                       →  │ A │        →  │ B │
                  0.8     └───┘           └───┘
        ┌───┐
        │ A │
        └───┘                                    ┌───┐
                  0.2                     0.12 →  │ A │
                       →  ┌───┐                   └───┘
                          │ B │    0.48   ┌───┐
                          └───┘        →  │ B │
                                          └───┘
                                   0.4    ┌───┐
                                       →  │ C │
                                          └───┘
```

| Moment 0 | Moment 1 | Moment 2 |
|---|---|---|

FIG. 9

Moment 0      Moment 1      Moment 2      Moment 3

FIG. 10

FIG. 11

| A | A | B | B |

Moment 0    Moment 1    Moment 2    Moment 3

FIG. 12

| A | A | B | B |

Moment 0    Moment 1    Moment 2    Moment 3

————————▶ Path 1

FIG. 13

1400

1401       1401

1403

| Processor | Processor |
|-----------|-----------|
| CPU 0 | CPU 0 |
| CPU 1 | CPU 1 |

Communications
bus 1402

Memory

1404       1405       1406

| Communications interface | Output device | Input device |
|--------------------------|---------------|--------------|

FIG. 14

**EP 3 592 000 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3010255 A1
- US 20120115475 A1
- WO 2014204487 A1